# EUROPÄISCHE PATENTSCHRIFT

(11) **EP 3 119 183 B1**
(45) Veröffentlichungstag und Bekanntmachung des Hinweises auf die Patenterteilung: **19.06.2019**
(21) Anmeldenummer: 15711670.8
(22) Anmeldetag: 06.03.2015
(51) Int. Cl.: A01D 89/00, A01D 84/00, A01D 61/00

(54) **ERNTEMASCHINE**
HARVESTER
MOISSONNEUSE

(30) Priorität: 17.03.2014 DE 102014103630
(43) Veröffentlichungstag der Anmeldung: 25.01.2017
(73) Patentinhaber: RT Engineering GmbH, 4707 Schlüsslberg (AT)
(72) Erfinder: REITER, Thomas, 4707 Schlüsslberg (AT)
(74) Vertreter: Puschmann Borchert Bardehle Patentanwälte Partnerschaft mbB
(86) Internationale Anmeldenummer: PCT/EP2015/054709
(87) Internationale Veröffentlichungsnummer: WO 2015/139970

(56) Entgegenhaltungen:
- WO-A1-2013/007939
- DD-A1- 128 901
- DD-A1- 143 496
- DE-U1-202010 010 038
- FR-A1- 2 908 588
- US-A1- 2010 037 584

## Beschreibung

Die Erfindung betrifft einen Erntemaschine umfassend eine Aufnahmeeinheit zur Aufnahme von Erntegut vom Boden sowie damit zusammenwirkende Arbeitseinheiten, insbesondere zur Weiterförderung des vom Boden abgehobenen Ernteguts, nach dem Oberbegriff des Anspruchs 1.

Die EP 2 478 756 A1 offenbart einen Ladewagen mit einer Aufnahmeeinheit, einer sogenannten Pick-Up. Zur Weiterförderung des von der Pick-Up aufgenommenen Ernteguts ist ein mit der Pick-Up zusammenwirkendes als Rotorfördereinheit ausgebildetes Förderaggregat vorgesehen. Zur besseren Bodenanpassung ist vorgesehen, dass die Pick-Up-Trommel kippbar aufgehängt ist.

Die DDR PS 128 901 offenbart eine ähnliche Anordnung, bei welcher eine Aufnahmeeinheit Segmente aufweist, die gegeneinander neigbar angeordnet sind und das aufgenommene Fördergut von einer Arbeitseinheit, einer Querförderschnecke, weitertransportiert wird.

Diese Anordnungen haben den Nachteil, dass zwischen der Aufnahmeeinheit bzw. Pick Up und der Fördereinheit bei Verkippung der Pick-Up ein Abstand entsteht, aufgrund dessen die Effektivität der Weiterförderung des Ernteguts reduziert wird, was zum einen zur stoßweisen Förderung des aufgenommenen Ernteguts führt, was wiederum zu Problemen bei der Weiterbehandlung durch nachfolgende Arbeitseinheiten führt. Zum anderen kann ein mangelnder Abtransport des Ernteguts dazu führen, dass die Funktion der Aufnahmeeinheit erheblich beeinträchtigt wird.

Die DE 20 2010 010 038 U1 offenbart eine Erntemaschine zur Bearbeitung von am Boden liegendem Erntegut, wobei dieses von einer Aufnahmeeinheit, auch Pick-Up, aufgenommen wird und an einen Querförderer übergeben wird, der dieses quer zur Fahrtrichtung abtransportiert.

Die quer zur Fahrtrichtung liegende Aufnahmeeinheit ist in Rotorsegmente unterteilt, die knickbar zueinander angeordnet sind. Dies hat den Nachteil, dass sich bei Bodenanpassung ein Versatz des Aufnahmeniveaus zum Weitertransportniveau des Querförderers ergibt, der sich negativ auf den Gutfluss auswirkt.

Die WO 2013/007939 A1 offenbart eine Erntemaschine mit zwei knickbar zueinander angeordneten Aufnahmeeinheiten je Element auf, wobei jedem Element ein Bandförderer zugeordnet ist. Diese Anordnung ist aufgrund der Tatsache, dass mehrere Bandförderer vorgesehen sein müssen, besonders aufwendig und teuer. Ähnliche Erntemaschinen sind in der US 2010/0037584 A1 und FR 2 908 588 A1 offenbart.

Es ist Aufgabe der Erfindung die genannten Nachteile zu vermeiden.

Die Aufgabe wird durch die kennzeichnenden Merkmale des Anspruchs 1 in Verbindung mit seinen Oberbegriffsmerkmalen gelöst.

Die Unteransprüche bilden eine vorteilhafte Weiterbildung der Erfindung.

In bekannter Weise umfasst eine Erntemaschine eine Aufnahmeeinheit, wobei die Aufnahmeeinheit eine Welle umfasst, welche Aufnahmewerkzeuge zur Aufnahme von Erntegut vom Boden trägt. Ferner sind insbesondere regelmäßig wenigstens zwei äußere Aufstandsmittel vorgesehen, welche die Aufnahmeeinheit tragen und über welche die Erntemaschine über den Boden geführt wird. Die Aufnahmeeinheit ist ferner insbesondere so ausgestaltet, dass diese wenigstens zwei Achsbereiche aufweist, die gegeneinander neigbar sind, um eine verbesserte Bodenanpassung zu erzielen. Die Neigung der Achsbereiche gegeneinander kann durch die Biegung einer biegeelastischen Welle der Aufnahmeeinheit oder die Neigung gelenkig gekoppelter Segmente der Aufnahmeeinheit erfolgen. Die Haupterstreckungsrichtung der Aufnahmeeinheit liegt insbesondere quer zur Fahrtrichtung.

Ferner weist die Erntemaschine eine mit der Aufnahmeeinheit zusammenwirkende Arbeitseinheit auf, die derart ausgebildet ist, dass ihre Haupterstreckungsrichtung parallel zur Haupterstreckungsrichtung der Aufnahmeeinheit liegt.

Die Arbeitseinheit weist zwei gegeneinander neigbare Teilbereiche auf. Die Arbeitseinheit ist insbesondere von einem der Arbeitseinheit zugeordneten Antrieb angetrieben.

Durch die Anpassbarkeit der Arbeitseinheit an die ihr zugeordnete Aufnahmeeinheit kann besonders bei großen Arbeitsbreiten eine erheblich effizientere und zuverlässigere Weiterverarbeitung des Erntegutes ermöglicht werden.

Erntemaschinen im Sinne der Erfindung sind Maschinen, die am Erntevorgang, insbesondere bei der Futterernte, beteiligt sind. Dies sind insbesondere Mähmaschinen, Schwader, insbesondere Bandschwader, Ladewagen, Ballenpresse oder ähnliches.

Durch die Neigung der Teilbereiche gegeneinander wird ein zwischen den gegeneinander geneigten Teilbereichen liegender Punkt der Arbeitseinheit relativ quer, insbesondere orthogonal, zu der Haupterstreckungsrichtung ausgelenkt.

Im Weiteren wird ein solcher der Aufnahmeeinheit zugeordneter Punkt als Referenz- Auslenkungspunkt bezeichnet, wobei ein der Arbeitseinheit zugeordneter Punkt als Auslenkungspunkt bezeichnet wird.

Der Auslenkungspunkt ist vorzugsweise in der Mitte der Arbeitseinheit in Haupterstreckungsrichtung definiert. Dadurch wird eine symmetrische Einstellung der Arbeitseinheit ermöglicht. Dasselbe kann für die Aufnahmeeinheit und den Referenz-Auslenkungspunkt gelten. In besonders vorteilhafter Weise können sowohl der Auslenkungspunkt als auch der Referenz-Auslenkungspunkt in einer Ebene orthogonal zur Haupterstreckungsrichtung liegen.

Vorzugsweise umfasst die Erntemaschine eine Stelleinrichtung. Diese Stelleinrichtung kann derart gestaltet sein, dass sie wenigstens einen Referenz-Auslenkungspunkt der Aufnahmeeinheit mit einem Auslenkungspunkt der Arbeitseinheit derart koppelt, dass eine Auslenkung des Referenz-Auslenkungspunktes eine definierte Auslenkung des Auslenkungspunktes der Arbeitseinheit zur Folge hat. Die definierte Auslenkung kann insbesondere in der Beibehaltung des Abstandes der Auslenkungspunkte zueinander bestehen.

Neben der Beibehaltung des Abstandes kann auch jegliche beliebige Übertragungsfunktion durch die Stelleinrichtung abgebildet werden.

Auf besonders einfache Weise ist die Stelleinrichtung mechanisch ausgebildet. Die Stelleinrichtung kann auch hydraulisch oder elektromechanisch ausgebildet sein.

Zur Verbesserung des Gutstroms ist die Arbeitseinheit als Rotorfördereinheit zur Weiterförderung von von der Aufnahmeeinheit vom Boden aufgehobenem Erntegut ausgebildet. So ist vorgesehen, dass die Rotorfördereinheit derart ausgebildet ist, dass diese in Haupterstreckungsrichtung wenigstens zwei Achsbereiche aufweist, die gegeneinander neigbar sind. Die Rotorfördereinheit ist insbesondere vertikal über der ihr zugeordneten Aufnahmeeinheit angeordnet.

Dadurch kann eine Anpassung des Abstandes zwischen der Aufnahmeeinheit und der Rotorfördereinheit erfolgen, wodurch eine verbesserte Weiterförderung des Ernteguts erreicht wird. Insbesondere sind die Rotorfördereinheit und ihre Anbindung an einen Tragerahmen derart ausgestaltet, dass die Achsbereiche im Wesentlichen in einer Schwenkebene neigbar gegeneinander sind. Diese Schwenkebene ist insbesondere die Normalebene zur Fahrtrichtung, wobei diese Ebene mit der Normalen der Aufstandsebene einen Winkel von ± 30° in Fahrtrichtung einschließen kann.

Um einen verbesserten Eingriff von Aufnahmewerkzeugen und Förderwerkzeugen zu erreichen, kann die Rotorfördereinheit in ihrer senkrechten Projektion, insbesondere in Fahrtrichtung, überlappend mit der Aufnahmeeinheit angeordnet sein.

Gemäß einer bevorzugten Ausführungsform kann vorgesehen sein, dass die Rotorfördereinheit wenigstens zwei in Achsrichtung starre Rotorelemente aufweist, die über wenigstens ein Verbindungselement neigbar verbunden sind. Vorzugsweise kann das Verbindungselement eine Schwenkachse der beiden Rotorelemente zueinander definieren, die in einer Ebene liegt, welche durch die Normale zur Aufstandsfläche und der Fahrtrichtung gebildet ist.

Ferner kann ein weiteres Verbindungselement vorgesehen sein, das ein Drehmoment übertragen kann. Beispielsweise kann das Verbindungselement als Getriebe ausgebildet sein und die Rotorelemente antreiben. Weiter denkbar ist die Ausgestaltung des Verbindungselementes als Kardangelenk oder klauenartige Kupplung.

In einer vorteilhaften Weiterbildung der Erfindung sind die Rotorelemente über eine Rotorlagerung an einen Fördereinheitstragrahmen angebunden.

Die Rotorfördereinheit kann daher an dem Fördereinheitstragrahmen derart angeordnet sein, dass die Rotorfördereinheit kipp- bzw. schwenkbar gegenüber dem Fördereinheitstragrahmen gehalten ist.

In einer weiteren bevorzugten Ausführungsform ist die Rotorfördereinheit über wenigstens zwei Lagerelemente an den Fördereinheitstragrahmen angebunden. Dabei kann jedem neigbaren Achsbereich ein Lagerelement zugeordnet sein, wobei jedes Lagerelement eine Schwenkachse definiert, so dass die Achsbereiche der Rotorfördereinheit gegenüber dem Fördereinheitstragrahmen verschwenkbar sind.

Die Lagerelemente können derart ausgebildet sein, dass sie sowohl eine Schwenkbewegung als auch eine geringe Bewegung in Querrichtung zulassen. Vorzugsweise können die Lagerelemente in etwa mittig der Rotorelemente aufgehängt bzw. angelenkt sein. Dies führt dazu, dass sich im ausbalancierten unbelasteten Zustand möglichst eine gemeinsame Rotationsachse aller Rotorelemente in Horizontalrichtung ergibt.

Vorzugsweise kann das Lagerelement in Form einer dünnwandigen und damit elastischen Platte, insbesondere einer Federstahlplatte, gebildet sein.

Dadurch kann auf einfache Weise eine spiel- und wartungsfreie Lagerung der Rotorfördereinheit am Fördereinheitstragrahmen erreicht werden.

Vorzugsweise können die Rotorelemente miteinander über wenigstens ein Verbindungsmittel schwenkbar verbunden sein, wobei die Achse des Verbindungsmittels in etwa in Fahrtrichtung liegt. Die Schwenkachse liegt insbesondere in einer Ebene, die von der Normalen zur Aufstandsfläche/Aufstandsebene und der Fahrtrichtung aufgespannt wird.

In besonders vorteilhafter Ausgestaltung ist diese Verbindung so ausgestaltet, dass sie keine translatorische Relativbewegung ermöglicht. Eine notwendige translatorische Bewegung der beiden Rotorelemente kann durch den Freiheitsgrad der elastischen Lagerelemente ermöglicht werden.

Durch das translationsbewegungsfreie Verbindungselement wird ein Verschwenken der Achsbereiche aus der Schwenkebene heraus effektiv vermieden, was wiederum die Stabilität der Rotorfördereinheit erhöht.

Vorzugsweise weist die Erntemaschine eine Stelleinrichtung auf, welche auf die Rotorfördereinheit wirkt, um die Neigung der Achsbereiche, insbesondere der Rotorelemente der Rotorfördereinheit, einzustellen.

Entsprechend einer besonders bevorzugten Ausführungsform der Erfindung ist die Stelleinrichtung derart ausgestaltet, dass sie die Neigung der Achsbereiche abhängig von der Neigung der Aufnahmeeinheit einstellt. So koppelt die Stelleinrichtung vorzugsweise wenigstens einen Referenz-Auslenkungspunkt der Aufnahmeeinheit mit einem Auslenkungspunkt der Rotorfördereinheit derart, dass eine Auslenkung des Referenz-Auslenkungspunktes eine definierte Auslenkung des Auslenkungspunktes der Rotorfördereinheit zur Folge hat. Die definierte Auslenkung kann insbesondere in der Beibehaltung des Abstandes, insbesondere des Abstandes der Auslenkungspunkte, zueinander bestehen.

In vorteilhafter Weise können der Auslenkungspunkt und Referenz-Auslenkungspunkt so gewählt sein, dass diese etwa in der Mitte der Aufnahmeeinheit und in der Mitte der Rotorfördereinheit liegen. Dadurch wird ein symmetrisches Verformungsverhalten aufgeprägt.

Auf diese Weise kann eine Anpassung der Verformungen von Aufnahmeeinheit und Rotorfördereinheit erreicht werden. Dadurch kann der Abstand zwischen Aufnahmeeinheit und Rotorfördereinheit über die gesamte Breite der Rotorfördereinheit kontrolliert in engen Grenzen gehalten werden.

Auf besonders einfache Weise ist die Stelleinrichtung mechanisch ausgebildet.

Zur Aufprägung der Verformung kann die Stelleinrichtung die Aufnahmeeinheit mit der Rotorfördereinheit mechanisch verbinden. Vorzugsweise kann die Stelleinrichtung mit einem Aufstandsmittel verbunden sein, das die Bodenkontur auf die Aufnahmeeinheit überträgt. Zur Übertragung dieser Relativbewegung des Aufstandsmittels auf die Rotorfördereinheit weist die Stelleinrichtung ein Hebelsystem auf. Das Hebelsystem kann vorzugsweise einen Lenker umfassen, der das Aufstandsmittel gegenüber dem Fördereinheitstragrahmen lagert. Auf diese Weise kann ein ohnehin notwendiges Bauteil eine zusätzliche Funktion ausführen.

Der Fördereinheitstragrahmen kann über einen Elementrahmen mit der Aufnahmeeinheit verbunden sein. Der Fördereinheitstragrahmen ist derart am Elementrahmen angebunden, dass die Rotorfördereinheit um eine Fördereinheitsschwenkachse quer zur Fahrtrichtung schwenkbar gelagert ist. Durch die Verschwenkbarkeit des Fördereinheitstragrahmens gegenüber dem Elementrahmen kann die Rotorfördereinheit bei hohem Fördervolumen des Ernteguts in vertikaler Richtung ausweichen.

Die Rotorfördereinheit kann eine Anlenkkonsole aufweisen, deren Anlenkpunkt mit der Stelleinrichtung verbunden ist. Vorzugsweise ist der Anlenkpunkt mit einem Steuerpunkt eines Hebels der Stelleinrichtung verbunden, wobei der Hebel gegenüber dem Elementrahmen derart gelagert ist, dass der Steuerpunkt bei ebener Aufstandsfläche auf der Fördereinheitsschwenkachse liegt.

Indem der Steuerpunkt auf dieser Fördereinheitsschwenkachse liegt, kann bei hohem Fördervolumen und damit einhergehender Auslenkung der Rotorfördereinheit ein Steuerfehler vermieden werden. So bleibt beispielsweise bei ebener Bodenaufstandsfläche und hohem Fördervolumen die Rotorfördereinheit in gestrecktem Zustand trotz Auslenkung in vertikaler Richtung.

Insbesondere ist ein Verbindungselement zwischen Steuerpunkt und Anlenkpunkt vorgesehen, das beidseitig ein Kugelgelenk aufweist. Dadurch wird bei einer besonders kostengünstigen Ausgestaltung eine hohe Steifigkeit erreicht und damit eine direkte Übertragungsfunktion.

Der Elementrahmen kann in vorteilhafter Weise in Seitenansicht U-förmig ausgebildet sein, wobei die Öffnung in Fahrtrichtung gerichtet ist. Dadurch wird eine maximale Durchgangsbreite für das Erntegut gewährleistet.

Innerhalb des U-Rahmens können weitere Weiterbearbeitungseinheiten, beispielsweise ein Querförderer, beispielsweise ein Bandförderer, angeordnet sein, wie er bei einer Bandschwader/Merger vorgesehen ist.

In einer weiteren denkbaren Ausführung kann die Rotorfördereinheit eine flexible Welle umfassen, wobei die Neigung einzelner Wellenabschnitte gegeneinander über die Durchbiegung der Welle einstellbar ist.

Gemäß einer weiteren Ausführungsform ist vorgesehen, dass eine zweite Arbeitseinheit als Bandförderer ausgebildet ist, wobei ein Förderband von wenigstens einer sich in Bandrichtung erstreckenden Tragstruktur getragen wird. Ferner ist die Tragstruktur derart ausgebildet, dass diese in wenigstens einem Punkt zwischen den Rollen orthogonal zur Bandfläche aus der Verbindungslinie der Rollen auslenkbar ist. Dadurch wird eine Neigung der Teilbereiche in Haupterstreckungsrichtung vor und hinter dem Auslenkungspunkt erreicht.

Die Verbindungslinie der Rollen kann im Wesentlichen parallel zu einer Ebene liegen, die der die Rollen tragende Rahmen, insbesondere der Elementrahmen, aufspannt.

Durch die Auslenkbarkeit der Tragstruktur kann eine Niveauanpassung des Bandniveaus gegenüber dem Elementrahmen erreicht werden. Insbesondere durch eine Abstimmung mit der Aufnahmeeinheit wird eine Anpassung der Verformung des Bandförderers an die Aufnahmeeinheit erreicht. Dadurch kann ein barrierefreier Übergang ermöglicht werden.

In einer Weiterbildung der Erfindung kann zudem eine Stelleinrichtung vorgesehen sein, wodurch die Auslenkung abhängig von der Auslenkung eines Referenz-Auslenkungspunkts der Aufnahmeeinheit erfolgt. Dies hat den Vorteil, dass dann sowohl die Aufnahmeeinheit als auch der Bandförderer weitgehend gleichmäßig an die Bodenkontur anpassbar sind.

Die Stelleinrichtung kann so ausgebildet sein, dass sie eine nicht stetige Übertragungsfunktion abbildet. So kann sie derart ausgebildet sein, dass bei Auslenkung des Referenz-Auslenkungspunktes der Auslenkungspunkt des Bandförderers erst verzögert ausgelenkt wird.

Dadurch wird insbesondere in Kuppenlage eine Bodenfreiheit garantiert, wodurch wiederum eine Kollision des Unterzugs des Förderbandes mit Bauteilen, die zwischen dem Elementrahmen und dem Boden angeordnet sind, vermieden wird.

Insbesondere kann die Stelleinrichtung ein in Vertikalrichtung relativ zum Rahmen bewegliches Aufstandsmittel umfassen, das zwischen den Rollen angeordnet ist, wodurch die Auslenkung abhängig von der Lage des Aufstandsmittels sehr direkt erfolgt. Gleichzeitig kann dieses Aufstandsmittel auch die Bodenanpassung für die Aufnahmeeinheit ermöglichen.

Gemäß einer besonders bevorzugten Ausführungsform kann die Tragstruktur eine biegeweiche Stützstrebe umfassen, die zwischen den Rollen vorgesehen ist. Die biegeweiche Stützstrebe kann dabei Auflageelemente tragen, die das Band in Vertikalrichtung stützen und aufgrund der biegeelastischen Ausgestaltung eine bogenförmige Verformung des Förderbandes erzielen. Durch die bogenförmige Verformung tritt eine geringe Flächenpressung und damit ein geringer Reibwiderstand auf.

In einer vorteilhaften Weiterbildung kann die Tragstruktur zwei Stützstreben umfassen, die in Bandrichtung parallel nebeneinander geführt sind. Dies sorgt für eine besonders gute Abstützung des Förderbandes des Bandförderers in Fahrtrichtung bzw. quer zur Bandrichtung und gewährleistet damit eine Verformung trotz großer Förderbreite. So wird ein stabiler Lauf ermöglicht, ohne dass es zu einem sogenannten seitlichen Anlaufen des Förderbandes kommt.

Insbesondere sind die Auflageelemente je einer der parallelen Stützstreben zugeordnet. Dadurch können Spannungen zwischen den Stützstreben vermieden werden. In vorteilhafter Weise können zwei parallele Stützstreben über einen Stabilisator verbunden sein, wodurch die Auslenkung der ersten Stützstrebe auf die parallele Stützstrebe übertragen wird.

In einer vorteilhaften Weise kann die Tragstruktur in Bandrichtung zwei biegeweiche Stützstreben umfassen, die über ein insbesondere elastisches Längenausgleichselement verbunden sind. Auf diese Weise können die Stützstreben in Querrichtung fest mit dem Rahmen verbunden sein, da der für die Biegung notwendige Längenversatz über ein Längenausgleichselement realisiert wird. Dadurch wird wegen der spielfreien Verbindung eine besonders verschleißfreie Lagerung gewährleistet.

Vorzugsweise kann das Längenausgleichselement als Klammer ausgebildet sein, durch welche eine Welle zum Antrieb der Aufnahmeeinheit geführt ist.

In vorteilhafter Weise wird der Elementrahmen mittels rahmentragender Aufstandsmittel über den Boden geführt. Dies sorgt für eine verbesserte Bodenanpassung und verbesserte Abbildung der Bodenkontur auf die Verformung des Bandförderers.

Insbesondere weist der Elementrahmen Hauptprofile quer zur Bandrichtung auf, an welchen die Aufnahmeeinheit gelagert ist.

Umfasst der Rahmen solche Hauptprofile, können die Stützstreben der Tragstruktur durch Ausnehmungen in den Hauptprofilen hindurch geführt sein. Dies sorgt für eine besonders kompakte Bauform der Erntemaschine.

Eine bei ebener Aufstandsfläche vorliegende Nulllinie kann vorzugsweise zwischen dem Oberzug und dem Unterzug des Förderbandes liegen, welches durch die Auflageelemente geführt ist.

In einer besonders vorteilhaften Ausgestaltung kann eine erfindungsgemäße Erntemaschine sowohl eine erste Arbeitseinheit aufweisen, die als Rotorfördereinheit ausqebildet ist, und eine zweite Arbeitseinheit, die als Bandförderer ausgebildet ist.

Auf diese Weise kann sowohl in Fahrtrichtung als auch anschließend quer zur Fahrtrichtung ein kontinuierlicher Gutstromförderung gewährleistet werden.

Aufstandsmittel im Sinne der Erfindung können Kufen, Räder, Walzen oder ähnliches sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine teilschematische Ansicht einer neigbaren Aufnahmeeinheit;
- Fig. 2: eine Erntemaschine mit einer Aufnahmeeinheit;
- Fig. 3: eine Teilansicht der Erntemaschine mit einem Rotorsegment, dem Rotoreinheitsträger sowie der Stelleinrichtung;
- Fig. 4: eine Detailansicht, bei der die Anlenkung des Rotors zu seiner Verstellung über die Stelleinrichtung dargestellt ist;
- Fig. 5: eine Schnittansicht der Erntemaschine;
- Fig. 6: eine Erntemaschine, die eine an die Bodenkontur anpassbare Aufnahmeeinheit umfasst;
- Fig. 7: eine erfindungsgemäße Erntemaschine in Schnittansicht;
- Fig. 8: einen Ausschnitt der Erntemaschine, und
- Fig. 9: eine besonders bevorzugte Ausführungsform einer Erntemaschine.

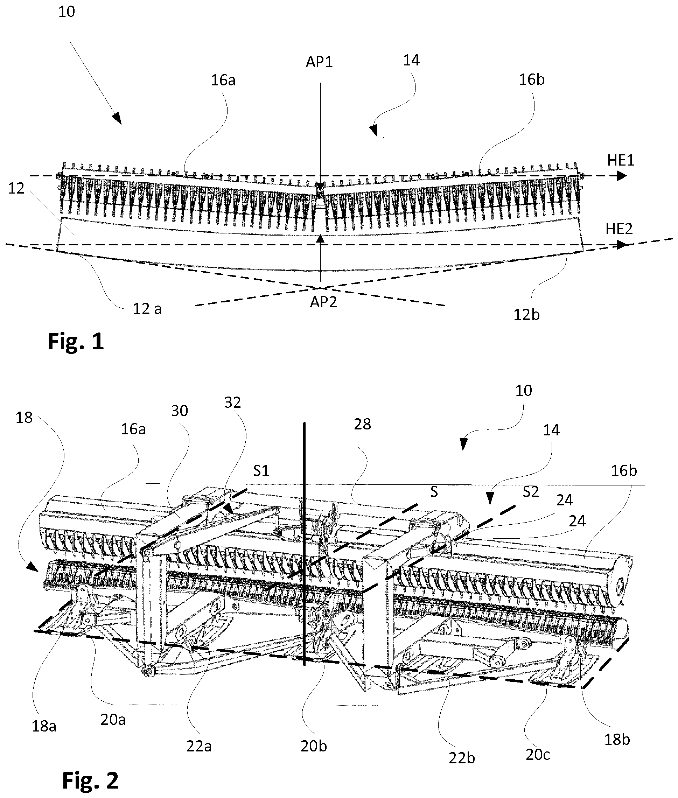

Fig. 1 zeigt teilschematisch eine durch biegeweiche Verformung neigbare Aufnahmeeinheit 12 sowie eine vertikal über dieser angeordneten Rotorfördereinheit 14. Die Rotorfördereinheit 14 weist zwei Rotorelemente 16a, 16b auf, die neigbar gegeneinander angeordnet sind. Zwischen den neigbaren Rotorelementen 16a, 16b liegt der relativ zur Haupterstreckungsrichtung HE1 auslenkbare Auslenkungspunkt AP1. Zwischen den zwei neigbaren Teilbereichen 12a, 12b der Aufnahmeeinheit 12 in Haupterstreckungsrichtung HE2 liegt ein Referenz-Auslenkungspunkt AP2. Durch eine definierte Auslenkung des Auslenkungspunkts AP1, insbesondere in Abhängigkeit von dem Referenz-Auslenkungspunkts AP2, kann eine Anpassung der Rotorfördereinheit 14 an die Kontur der Aufnahmeeinheit 12 erreicht werden. Auf diese Weise wird der Abstand, den die Rotorfördereinheit 14 zur Aufnahmeeinheit 12 hat, kontrollierbar, wodurch ein idealer und sicherer Gutfluss erreicht wird.

Fig. 2 zeigt eine Erntemaschine mit einer Aufnahmeeinheit 18, welche Achsbereiche 18a, 18b aufweist, die gegeneinander neigbar sind und an die Bodenkontur angepasst sind.

Ferner ist als Arbeitseinheit eine Rotorfördereinheit 14 vorgesehen, die vertikal über der Aufnahmeeinheit 18 angeordnet ist. Die Rotorfördereinheit 14 weist zwei starre Rotorsegmente 16a, 16b auf, die um eine Schwenkachse S schwenkbar gegeneinander angeordnet sind. Die Lage der Schwenkachse im Raum ergibt sich aus der Lage der Schwenkachsen S₁, S₂, die durch die Lagerelemente 24 gebildet werden. Dazu sind die Rotorsegmente 16a, 16b über Lagerelemente 24 an einen Fördereinheitstragrahmen 28 angebunden. Die Lagerelemente 24 sind als Federstahlbleche ausgebildet und entsprechend derart gestaltet, dass sie eine geringe axiale Bewegung in Rotorachsrichtung als auch eine Schwenkbewegung zulassen. Auf diese Weise kann eine Anpassung der Neigung der Rotorsegmente 16a, 16b gegeneinander eingestellt werden.

Der Fördereinheitstragrahmen 28 ist schwenkbar an einem Elementrahmen 30 angeordnet, welcher auch die Aufnahmeeinheit 18 trägt. Eine Synchronisation der biegeweich verformbaren Aufnahmeeinheit 18 mit der Rotorfördereinheit 14 erfolgt über eine Stelleinrichtung 32, welche mit gegenüber dem Elementrahmen 30 vertikal beweglich gelagerten Kufen 20b verbunden ist. Insgesamt wird der Elementrahmen über die Kufen 22a, 22b getragen, wobei eine Auslenkung über Lenker an den Tragrahmen angebundenen Kufen 20a, 20b, 20c erfolgt.

Auf diese Wiese kann abhängig von der Bodenkontur ein gleichbleibender Abstand zwischen der Rotationsfördereinheit 14 und der Aufnahmeeinheit 18 erzielt werden, wodurch ein idealer Gutfluss zwischen Aufnahmeeinheit 18 und Rotorfördereinheit 14 gewährleistet ist.

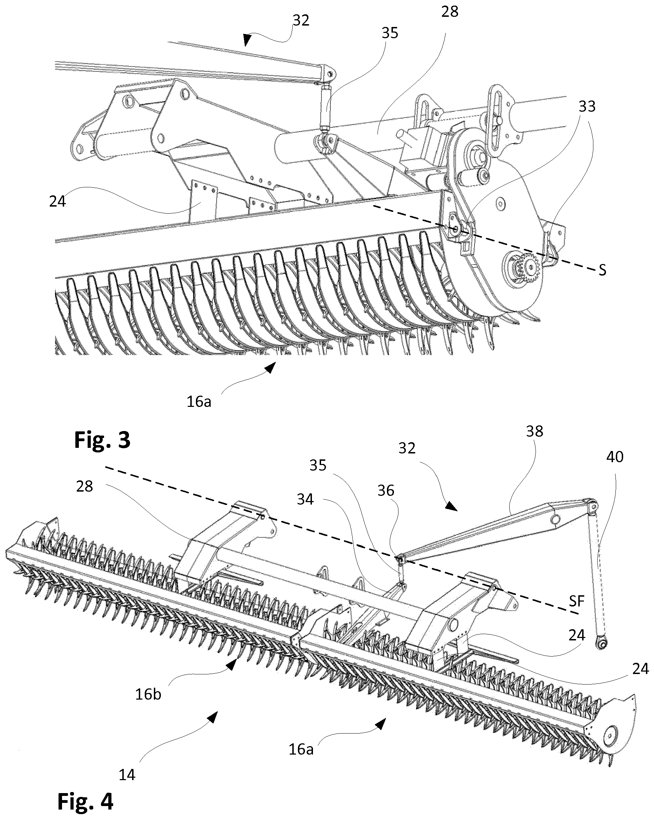

Fig. 3 zeigt eine Teilansicht der Erntemaschine 10 mit einem Rotorsegment 16a, dem Fördereinheitstragrahmen 28 sowie der Stelleinrichtung 32. Zudem sind Achsen 33 vorgesehen, durch die die zwei Rotorsegmente 16a, 16b derart verbindbar sind, dass eine Knickbewegung um die Achse 33 möglich ist, jedoch eine translatorische Bewegung zwischen den Verbindungselementen und damit den Rotorsegmenten 16a, 16b ausgeschlossen ist. Die notwendige translatorische Bewegungsfreiheit wird von den Lagerelementen 24 insbesondere durch ihre Elastizität bereitgestellt. Dadurch kann eine Verkippung der Rotorfördereinheit 14 in engen Grenzen ermöglicht werden und trotzdem eine hohe Grundstabilität um die Knickachse gewährleistet werden.

Fig. 4 zeigt eine weitere Detailansicht, bei der die Anlenkung der Rotorfördereinheit 14 über die Stelleinrichtung 32 dargestellt ist. An dieser Darstellung ist gut erkennbar, dass an dem Fördereinheitstragrahmen 28 über Lagerelemente 24 die Rotorsegmente 16a, 16b angebunden sind. Ferner ist ein Anlenkelement 34 vorgesehen, welches mit dem Rotorsegment 16a fest verbunden ist. Auf das Anlenkelement 34 wird über die Stelleinrichtung 32 eine Steuerkraft ausgeübt. Die Stelleinrichtung 32 umfasst ferner eine Schubstange 35, welche über ein Kugelgelenk mit dem Anlenkelement 34 und einem drehbar gegenüber einem Rahmen 30 gelagerten Hebel 38 verbunden ist. Der Übergang vom Hebel 38 zur Schubstange 35 stellt den Steuerpunkt 36 dar.

Die Stelleinrichtung 32 ist so ausgebildet, dass bei ebener Aufstandsfläche der Steuerpunkt 36 auf der Schwenkachse SF des Fördereinheitstragrahmens 28 liegt.

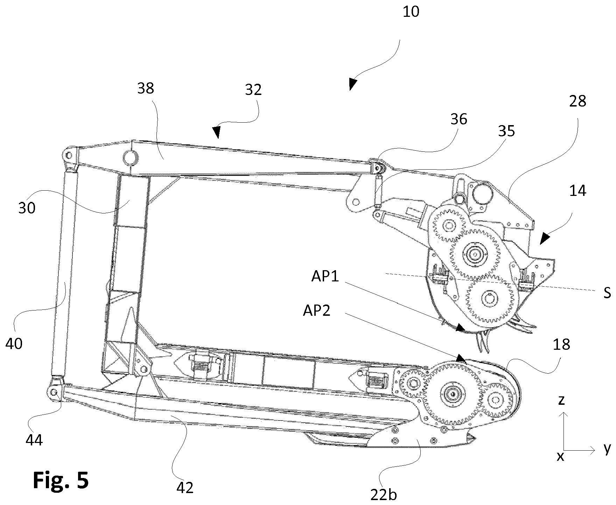

Durch diese Anordnung kann weitgehend spielfrei eine Verkippung der Rotorsegmente 16a, 16b erfolgen. Die Funktionsweise der Stelleinrichtung 32 wird in Fig. 5 näher verdeutlicht.

Fig. 5 zeigt eine Schnittansicht der Erntemaschine 10. Besonders gut zu erkennen ist hier die Stelleinrichtung 32, welche als Hebelsystem ausgebildet ist, um die Verformung der Aufnahmeeinheit 18 auf die Verformung der Rotorfördereinheit 14 zu übertragen. Die Verformung der Aufnahmeeinheit 18 wird unter anderem durch einen Versatz der Kufe 22b in Z-Richtung aufgeprägt. Diese Verformung wird über den Lenker 42 auf ein über die Lenkeraufhängung in Lenkerachsrichtung hinausgehenden Anlenkpunkt 44 übertragen. Die Auslenkung des Anlenkpunkts 44 wird über eine Schubstange 40 auf den ebenfalls am Rahmen 30 drehbar gelagerten Hebel 38 übertragen. Diese Übertragung wirkt wiederum auf den Steuerpunkt 36, wodurch die Schubstange 35 auf die Anlenkkonsole 34 wirkt und die Rotormitte in vertikaler Richtung analog zum Versatz der Kufe 22b auslenkt.

Für die Anordnung ist es wesentlich, dass der Steuerpunkt 36 auf der Schwenkachse SF des Fördereinheitstragrahmens 28 liegt, wenn die Erntemaschine 10 auf einer ebenen Fläche ausgerichtet ist. Auf diese Weise kann ein Steuerfehler bei Verschwenken des Fördereinheitstragrahmens 28 gegenüber dem Elementrahmen 30 auf die Rotorfördereinheit 14 vermieden werden. Dadurch kann eine Kollision der Rotorfördereinheit 14 mit der Aufnahmeeinheit 18 verhindert werden.

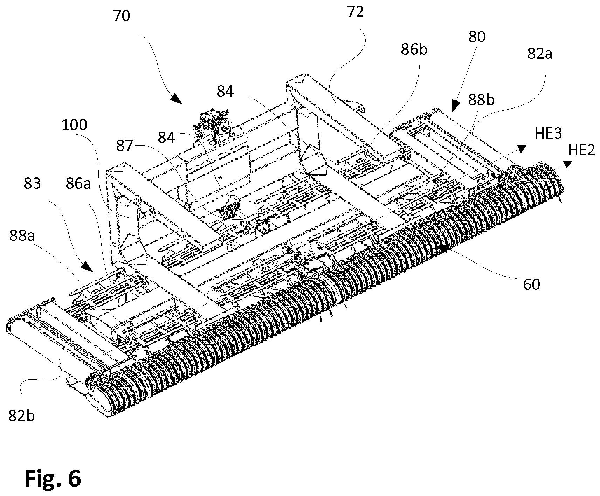

Fig. 6 zeigt eine Erntemaschine 70, die eine an die Bodenkontur anpassbare Aufnahmeeinheit 60 umfasst, die sich in Haupterstreckungsrichtung HE1 quer zur Fahrtrichtung erstreckt. Ferner ist als Arbeitseinheit, die mit der Aufnahmeeinheit 60 zusammenwirkt, ein Bandförderer 80 vorgesehen, der sich ebenfalls in einer Haupterstreckungsrichtung HE3 quer zur Fahrtrichtung erstreckt. Sowohl der Bandförderer 80 als auch die Aufnahmeeinheit 60 werden von einem Elementrahmen 100 getragen. Der Bandförderer 80 umfasst Rollen 82a, 82b, die gegenüber dem Elementrahmen 72 gelagert sind. Über diese Rollen 82a, 82b wird das Förderband gespannt, wobei dieses in dieser Darstellung nicht gezeigt ist. Das Förderband wird von einer Tragstruktur 83 getragen, welche Stützelemente 84 aufweist. Erfindungsgemäß sind die Stützelemente 84 auf biegeweichen Stützstreben 86 gelagert, wodurch eine gestützte Durchbiegung des Förderbandes möglich wird. Die Streben 86a, 86b sind über eine Klammer 87 verbunden, wobei die Klammer 87 derart ausgestaltet ist, dass diese einen Längenausgleich ermöglicht. Auf diese Weise wird eine gleichmäßige Verformung der Stützstreben 86a, 86b ermöglicht, die über die Auflageelemente 84 auf das Förderband übertragen wird.

Dadurch wird eine gleichmäßige Verformung des Bandförderers 80 gewährleistet, wodurch hohe lokale Anpresskräfte bei der Verformung vermieden werden und eine optimale Anpassung an die Aufnahmeeinheit ermöglicht wird.

Durch die Anpassung der Verformung des Bandförderers 80 an die Verformung der Aufnahmeeinheit 60 wird zum Einen ein besonders störungsfreier Gutfluss und zum Anderen eine ausreichende Bodenfreiheit des Förderbandes in Kuppen- und/oder Wannenlage gewährleistet.

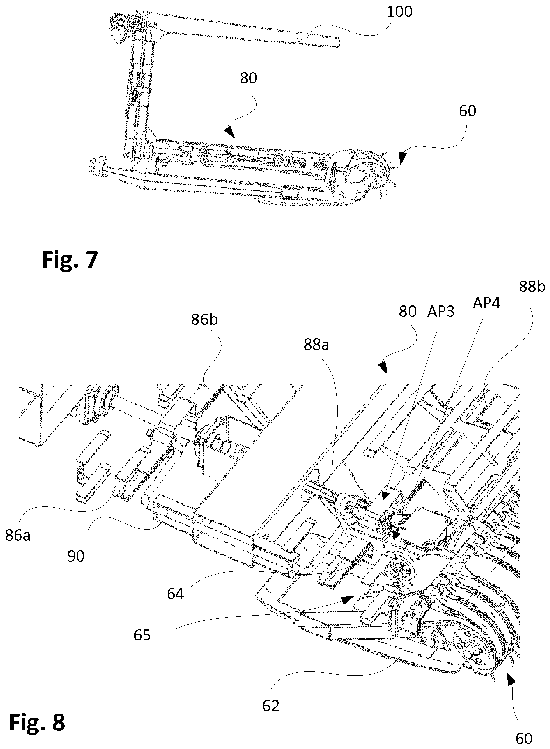

Fig. 7 zeigt eine erfindungsgemäße Erntemaschine in Schnittansicht, wobei die an die Bodenkontur anpassbare Aufnahmeeinheit 60 und die als Bandförderer 80 ausgebildete Arbeitseinheit über den gemeinsamen Elementrahmen 100 verbunden sind. Mit dieser Anordnung ist eine besonders leichte und effektive Erntemaschine geschaffen.

Fig. 8 zeigt einen Ausschnitt der Erntemaschine 70, wobei insbesondere gut zu erkennen ist, wie die Bewegung der mittleren Kufe 62, welche die Bodenanpassung auf die Aufnahmeeinheit 60 überträgt, die Auslenkung des Bandförderers 80 realisiert.

Eine Auslenkeinrichtung 65 umfasst die Kufe 62 und eine Spange 64, die mit der Kufe 62 verbunden ist, wobei die Spange 64 die Stützstrebe 88a an der Ober- und Unterseite umgreift. Je nach Abstand zwischen Stützstrebe 88a und Spangenschenkel in der ausgerichteten Lage, kann eine gewisse Versatzreduzierung eingestellt sein. Dies heißt, je größer der Abstand zwischen den Schenkeln der Spange 64 und der Stützstrebe 88a ist, desto größer muss die Durchbiegung der Aufnahmeeinheit 60 sein, damit diese Bewegung auf die Auslenkung der Tragestruktur 83 und damit des Bandförderers 80 übertragen wird. Der Abstand von Auslenkungspunkt AP3 und Referenz-Auslenkungspunkt AP4 der Aufnahmeeinheit folgt somit einer nicht stetigen Übertragungsfunktion.

Wird die vordere Strebe 88a, 88b ausgelenkt, wird diese Auslenkung über einen Stabilisator 90 übertragen, der hier schematisch dargestellt ist. Die Übertragung über den Stabilisator 90 erfolgt von der Strebe 88a, 88b auf die zweite Strebe 86a, 86b. Auf diese Weise kann eine ideale Anpassung von der Neigung der Aufnahmeeinheit 60 zur Neigung der Teilbereiche des Bandförderers 80 realisiert werden. Durch den Abstand der Spangenschenkel kann eine flachere Biegelinie des Bandförderers 80 im Vergleich zur Biegelinie der Aufnahmeeinheit 60 eingestellt werden. Dadurch können sowohl die Dauerfestigkeit erhöht werden als auch die Anpassung an die Aufnahmeeinheit so gesteuert werden, dass die Reibungsverluste des Förderbandes reduziert werden und dennoch ein barrierefreier Übergang von der Aufnahmeeinheit zum Bandförderer 80 erfolgen kann.

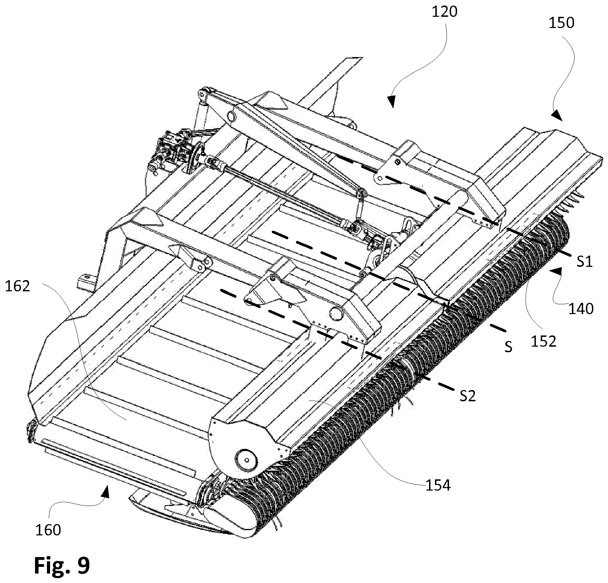

Fig. 9 zeigt eine besonders bevorzugte Ausführungsform einer Erntemaschine 120, welche eine Aufnahmeeinheit 140 und zwei Arbeitseinheiten umfasst, wobei eine erste Arbeitseinheit eine Rotorfördereinheit 150 und die zweite Arbeitseinheit ein Bandförderer 160 ist. Sowohl die Rotorfördereinheit 150, die über der Aufnahmeeinheit 140 angeordnet ist, ist über zwei Teilbereiche 152, 154 neigbar um ihre Schwenkachse S angeordnet. Die Lagerung des Förderbandes 160 ist, wie zuvor beschrieben, über biegeweiche Stützstreben derart gelagert, dass eine kontinuierliche Verformung möglich ist, wobei sich tangentiale Teilbereiche ergeben, die gegeneinander geneigt sind und in Synchronisation mit der Aufnahmeeinheit 140 an die Bodenkontur angepasst werden können.

Mit dieser Erntemaschine ist eine besonders effiziente und leichte Erntemaschine angegeben, die zur Aufnahme von Erntegut und Querförderung des Ernteguts besonders geeignet ist.

### Bezugszeichenliste

- 10: Erntemaschine
- 12: Aufnahmeeinheit
- 12a: Teilbereich
- 12b: Teilbereich
- 14: Rotorfördereinheit
- 16a: Rotorelement
- 16b: Rotorelement
- 18: Aufnahmeeinheit
- 18a: Achsbereich
- 18b: Achsbereich
- 20a: Kufe
- 20b: Kufe
- 20c: Kufe
- 22a: Kufe
- 22b: Kufe
- 24: Lagerelement
- 28: Fördereinheitstragrahmen
- 30: Elementrahmen
- 32: Stelleinrichtung
- 33: Achse
- 34: Anlenkkonsole
- 35: Lenkstange
- 36: Steuerpunkt
- 38: Hebel
- 40: Lenkstange
- 42: Lenker
- 44: Anlenkpunkt
- 60: Aufnahmeeinheit
- 62: Kufe
- 64: Spange
- 65: Auslenkeinrichtung
- 70: Erntemaschine
- 72: Elementrahmen
- 80: Bandförderer
- 82a: Rolle
- 82b: Rolle
- 83: Tragstruktur
- 84: Stützelemente
- 86: Stützstrebe
- 86a: Stützstrebe
- 86b: Stützstrebe
- 87: Klammer
- 88: Stützstrebe
- 88a: Stützstrebe
- 88b: Stützstrebe
- 90: Stabilisator
- 100: Elementrahmen
- 120: Erntemaschine
- 140: Aufnahmeeinheit
- 150: Rotorfördereinheit
- 152: Teilbereich
- 154: Teilbereich
- 160: Bandförderer
- 162: Förderband
- S: Schwenkachse
- S1: Schwenkachse
- S2: Schwenkachse
- HE1: Haupterstreckungsrichtung
- HE2: Haupterstreckungsrichtung
- HE3: Haupterstreckungsrichtung
- SF: Fördereinheitsschwenkachse
- AP1: Auslenkungspunkt Arbeitseinheit
- AP2: Referenz-Auslenkungspunkt Aufnahmeeinheit
- AP3: Auslenkungspunkt Arbeitseinheit
- AP4: Referenz-Auslenkungspunkt Aufnahmeeinheit

## Patentansprüche

1. Erntemaschine (10) umfassend eine Aufnahmeeinheit (12, 18, 60, 140), die eine Welle umfasst, welche Aufnahmewerkzeuge zur Aufnahme von Erntegut vom Boden trägt, wobei ferner wenigstens eine Arbeitseinheit (14, 80, 150, 160) zur Weiterverarbeitung von von der Aufnahmeeinheit (12, 18, 60, 140) vom Boden aufgehobenem Erntegut vorgesehen ist, wobei die Arbeitseinheit (14, 80, 150, 160) sich in einer Haupterstreckungsrichtung (HE1, HE3) im Wesentlichen parallel zur Haupterstreckungsrichtung (HE2) der ihr zugeordneten Aufnahmeeinheit (12, 18, 60, 140) erstreckt, wobei die Arbeitseinheit (14, 80, 150, 160) derart ausgebildet ist, dass sie in Haupterstreckungsrichtung (HE1, HE3) wenigstens zwei Teilbereiche (152, 154) aufweist, die gegeneinander neigbar sind und zwischen den Teilbereichen (152, 154) ein Auslenkungspunkt (AP1, AP3) liegt, der relativ zur Haupterstreckungsrichtung (HE1, HE3) auslenkbar ist, wobei die Aufnahmeeinheit (12, 18, 60, 140) so ausgestaltet ist, dass diese wenigstens zwei Teilbereiche (12a, 12b) aufweist, die gegeneinander neigbar sind und zwischen den Teilbereichen (12a, 12b) ein Auslenkungspunkt (AP2, AP4) liegt, der relativ zur Haupterstreckungsrichtung (HE2) auslenkbar ist **dadurch gekennzeichnet, dass** die Arbeitseinheit als Rotorfördereinheit (14, 150) zur Weiterförderung von von der Aufnahmeeinheit (12, 18, 140) vom Boden aufgehobenem Erntegut vorgesehen ist, wobei die Rotorfördereinheit (14, 150) vertikal über der ihr zugeordneten Aufnahmeeinheit (12, 18,140) angeordnet ist und um wenigstens eine Rotationsachse rotiert, wobei die Teilbereiche (152, 154) durch Achsbereiche (16a, 16b) gebildet sind, die gegeneinander neigbar sind.

2. Erntemaschine nach Anspruch 1, **dadurch gekennzeichnet, dass** eine Stelleinrichtung vorgesehen ist, die mit der Arbeitseinheit (14, 80,150,160) und der Aufnahmeeinheit (12, 18, 60, 140) derart verbunden ist, dass die Auslenkung des der Aufnahmeeinheit zugeordneten Auslenkungspunkts (AP2, AP4) - Referenz-Auslenkungspunkt - zu einer definierten Auslenkung des der Arbeitseinheit zugeordneten Auslenkungspunkts (AP1, AP3) führt.

3. Erntemaschine nach einem der vorangehenden Ansprüche, **dadurch gekennzeichnet, dass** die Rotorfördereinheit (14, 150) in ihrer senkrechten Projektion überlappend mit der Aufnahmeeinheit (12, 18, 140) angeordnet ist.

4. Erntemaschine nach einem der vorangehenden Ansprüche, **dadurch gekennzeichnet, dass** die Rotorfördereinheit (14, 150) wenigstens zwei in Achsrichtung starre Rotorelemente (16a, 16b) aufweist, die über ein Verbindungselement gegeneinander neigbar verbunden sind.

5. Erntemaschine nach einem der vorangehenden Ansprüche 2 bis 4, **dadurch gekennzeichnet, dass** eine Stelleinrichtung (32) vorgesehen ist, die derart auf die Rotorfördereinheit (14, 150) wirkt, dass diese die Neigung der Achsbereiche (16a, 16b) zueinander einstellt.

6. Erntemaschine nach einem der vorangehenden Ansprüche 2 bis 5, **dadurch gekennzeichnet, dass** die Stelleinrichtung (32) mechanisch ausgebildet ist.

7. Erntemaschine nach einem der vorangehenden Ansprüche, **dadurch gekennzeichnet, dass** die Rotorfördereinheit (14, 150) über wenigstens zwei Lagerelemente (24) an einen Rahmen angebunden ist, wobei jedem Teilbereich (16a, 16b, 152, 154) wenigstens ein Lagerelement (24) zugeordnet ist.

8. Erntemaschine nach einem der vorangehenden Ansprüche, **dadurch gekennzeichnet, dass** eine zweite Arbeitseinheit als Bandförderer (80, 160) ausgebildet ist, wobei an einem die Aufnahmeeinheit (60, 140) tragenden Rahmen Rollen (82a, 82b) angeordnet sind, über welche ein Förderband (162) geführt ist und das Förderband (162) zwischen den Rollen (82a, 82b) über eine Tragstruktur (83) derart getragen ist, dass die Tragstruktur (83) zwei Teilbereiche in Haupterstreckungsrichtung aufweist, die gegeneinander neigbar sind.

9. Erntemaschine nach Anspruch 8, **dadurch gekennzeichnet, dass** eine Auslenkeinrichtung (65) vorgesehen sind, die mit der Tragstruktur (86a) derart verbunden ist, dass eine Auslenkung der Tragstruktur (86a) abhängig von der Bodenkontur erfolgt.

10. Erntemaschine nach einem der vorangehenden Ansprüche 8 oder 9, **dadurch gekennzeichnet, dass** die Auslenkeinrichtung (65) ein in Vertikalrichtung relativ zum Rahmen bewegliches Aufstandsmittel (62) umfasst, das zwischen den Rollen (82a, 82b) angeordnet ist, wodurch die Auslenkung abhängig von der Lage des Aufstandsmittels (62) anpassbar ist.

11. Erntemaschine nach einem der vorangehenden Ansprüche 8 bis 10, **dadurch gekennzeichnet, dass** die Tragstruktur (83) wenigstens eine biegeweiche Stützstrebe (86a, 86b, 88a, 88b) umfasst, die zwischen den Rollen (82a, 82b) vorgesehen ist, wobei die Neigung der Teilbereiche durch die Biegung der Stützstrebe (86a, 86b, 88a, 88b) erreicht wird.

12. Erntemaschine nach einem der vorangehenden Ansprüche 8 bis 11, **dadurch gekennzeichnet, dass** die Tragstruktur zwei biegeweiche Stützstreben (86a, 86b, 88a, 88b) umfasst, die in Bandrichtung parallel nebeneinander geführt sind

13. Erntemaschine nach einem der vorangehenden Ansprüche 8 bis 12, **dadurch gekennzeichnet, dass** die Tragstruktur in Bandrichtung zwei biegeweiche Stützstreben (86a, 86b, 88a, 88b) umfasst, die über ein insbesondere elastisches Längenausgleichselement verbunden sind, wobei das Längenausgleichselement als Klammer (87) ausgebildet ist.

14. Erntemaschine nach einem der vorangehenden Ansprüche 8 bis 13, **dadurch gekennzeichnet, dass** die zwei parallelen Stützstreben (86, 88) über einen Stabilisator (90) verbunden sind.

15. Erntemaschine nach einem der vorangehenden Ansprüche 8 bis 14, **dadurch gekennzeichnet, dass** die Auslenkeinrichtung ein Spangenelement (64) umfasst, welche Schenkel aufweist, die die Tragstruktur (86a) in Auslenkungsrichtung umgreifen, wobei die Schenkel in Auslenkungsrichtung zur Tragstruktur (86a) beabstandet sind.

## Claims

1. Harvester (10) comprising a pick-up unit (12, 18, 60, 140) which comprises a shaft that carries pick-up tools for picking up crop from the ground, with at least one working unit (14, 80, 150, 160) being moreover provided for further processing crop picked up from the ground by the pick-up unit (12, 18, 60, 140), which working unit (14, 80, 150, 160) extends in a main extension direction (HE1, HE3) substantially in parallel to the main extension direction (HE2) of the pick-up unit (12, 18, 60, 140) assigned to it, said working unit (14, 80, 150, 160) being designed such that, in the main extension direction (HE1, HE3), it has at least two segments (152, 154) which can be inclined with respect to one another, and between the segments (152, 154) there is a deflection point (AP1, AP3) which can be deflected relatively to the main extension direction (HE1, HE3), said pick-up unit (12, 18, 60, 140) being designed to have at least two segments (12a, 12b) which can be inclined relative to one another and which have a deflection point (AP2, AP4) between them that is deflectable relative to the main extension direction (HE2), **characterized in that** the working unit is provided in the form of a rotary conveyor unit (14, 150) for further conveying the crop picked up from the ground by the pick-up unit (12, 18, 140), which rotary conveyor unit (14, 150) is arranged vertically above the pick-up unit (12, 18, 140) assigned to it and rotates about at least one axis of rotation, said segments (152, 154) being formed by axis segments (16a, 16b) which can be inclined relative to one another.

2. Harvester according to claim 1, **characterized in that** an actuating device is provided which is connected to the working unit (14, 80, 150, 160) and to the pick-up unit (12, 18, 60, 140) in such a way that deflection of the deflection point (AP2, AP4) - reference deflection point - assigned to the pick-up unit will result in a defined deflection of the deflection point (AP1, AP3) assigned to the working unit.

3. Harvester according to any one of the preceding claims, **characterized in that** - in its vertical projection - the rotary conveyor unit (14, 150) is arranged overlapping the pick-up unit (12, 18, 140).

4. Harvester according to any one of the preceding claims, **characterized in that** the rotary conveyor unit (14, 150) comprises at least two rotary elements (16a, 16b) which are rigid in the axial direction and connected to each other by a connecting element to be tiltable relative to one another.

5. Harvester according to any one of claims 2 to 4 above, **characterized in that** an actuating device (32) is provided which suitably acts on the rotary conveyor unit (14, 150) to cause said unit to adjust the tilt of the axis segments (16a, 16b) relative to one another.

6. Harvester according to any one of claims 2 to 5 above, **characterized in that** the actuating device (32) is of a mechanical design.

7. Harvester according to any one of the preceding claims, **characterized in that** the rotary conveyor unit (14, 150) is connected to a frame via at least two bearing elements (24), with at least one bearing element (24) being assigned to each segment (16a, 16b, 152, 154).

8. Harvester according to any one of the preceding claims, **characterized in that** a second working unit is designed as a belt conveyor (80, 160), wherein rollers (82a, 82b), over which a conveyor belt (162) is guided, are arranged on a frame supporting the pick-up unit (60, 140), and said conveyor belt (162) is supported between the rollers (82a, 82b) via a supporting structure (83) in such a way that said supporting structure (83) has two segments in the main extension direction which can be inclined relative to each other.

9. Harvester according to claim 8, **characterized in that** a deflection device (65) is provided which is suitably connected to the supporting structure (86a) to cause deflection of the supporting structure (86a) depending on the ground contour.

10. Harvester according to any one of claims 8 or 9 above, **characterized in that** said deflection means (65) comprises a contact means (62) that can be moved vertically relative to the frame and that is arranged between the rollers (82a, 82b), whereby the deflection can be adjusted depending on the position of the contact means (62).

11. Harvester according to any one of claims 8 to 10 above, **characterized in that** the support structure (83) comprises at least one flexible support strut (86a, 86b, 88a, 88b) provided between the rollers (82a, 82b), with the inclination of the segments being accomplished by bending said support strut (86a, 86b, 88a, 88b).

12. Harvester according to any one of claims 8 to 11 above, **characterized in that** the supporting structure comprises two flexible support struts (86a, 86b, 88a, 88b) which are arranged parallel to one another in the direction of the belt.

13. Harvester according to any one of claims 8 to 12 above, **characterized in that** the supporting structure comprises two flexible support struts (86a, 86b, 88a, 88b) in the direction of the belt, which support struts (86a, 86b, 88a, 88b) are connected via a particularly elastic length compensation element, said length compensation element being formed as a clamp (87).

14. Harvester according to any one of claims 8 to 13 above, **characterized in that** said two parallel support struts (86, 88) are connected via a stabilizer (90).

15. Harvester according to any one of claims 8 to 14 above, **characterized in that** the deflection means comprises a brace member (64) which has legs that engage around the support structure (86a) in the direction of deflection, which legs are spaced from the support structure (86a) in the direction of deflection.

## Revendications

1. Machine de récolte (10) comprenant une unité de réception (12, 18, 60, 140) qui comprend un arbre, lequel porte des outils de réception destinés à recevoir la récolte du sol, dans laquelle au moins une unité de travail (14, 80, 150, 160) destinée à retraiter la récolte soulevée du sol par l'unité de réception (12, 18, 60, 140) est en outre prévue, dans laquelle l'unité de travail (14, 80, 150, 160) s'étend dans une direction d'étendue principale (HE1, HE3) sensiblement parallèlement à la direction d'étendue principale (HE2) de l'unité de réception (12, 18, 60, 140) qui lui est associée, dans laquelle l'unité de travail (14, 80, 150, 160) est conçue de telle manière qu'elle présente dans la direction d'étendue principale (HE1, HE3) au moins deux zones partielles (152, 154) qui peuvent être inclinées l'une par rapport à l'autre et un point de déviation (AP1, AP3), qui peut être dévié par rapport à la direction d'étendue principale (HE1, HE3), se situe entre les zones partielles (152, 154), dans laquelle l'unité de réception (12, 18, 60, 140) est réalisée de telle sorte que celle-ci présente au moins deux zones partielles (12a, 12b) qui peuvent être inclinées l'une par rapport à l'autre et un point de déviation (AP2, AP4), qui peut être dévié par rapport à la direction d'étendue principale (HE2), se situe entre les zones partielles (12a, 12b), **caractérisée en ce que** l'unité de travail sous forme d'unité de transport à rotor (14, 150) est destinée à faire suivre la récolte soulevée du sol par l'unité de réception (12, 18, 140), dans laquelle l'unité de transport à rotor (14, 150) est agencée verticalement au-dessus de l'unité de réception (12, 18, 140) qui lui est associée et tourne autour d'au moins un axe de rotation, dans laquelle les zones partielles (152, 154) sont formées par des zones axiales (16a, 16b), qui peuvent être inclinées les unes par rapport aux autres.

2. Machine de récolte selon la revendication 1, **caractérisée en ce qu'**un dispositif de réglage est prévu, qui est relié à l'unité de travail (14, 80, 150, 160) et à l'unité de réception (12, 18, 60, 140) de telle sorte que la déviation du point de déviation (AP2, AP4) -point de déviation de référence- associé à l'unité de réception entraîne une déviation définie du point de déviation (AP1, AP3) associé à l'unité de travail.

3. Machine de récolte selon l'une quelconque des revendications précédentes, **caractérisée en ce que** l'unité de transport à rotor (14, 150) est agencée dans sa projection verticale de manière à chevaucher l'unité de réception (12, 18, 60, 140).

4. Machine de récolte selon l'une quelconque des revendications précédentes, **caractérisée en ce que** l'unité de transport à rotor (14, 150) présente au moins deux éléments rotor (16a, 16b) fixes dans la direction axiale, qui sont reliés de manière à pouvoir être inclinés l'un par rapport à l'autre par l'intermédiaire d'un élément de liaison.

5. Machine de récolte selon l'une quelconque des revendications 2 à 4, **caractérisée en ce qu'**un dispositif de réglage (32) est prévu, qui agit sur l'unité de transport à rotor (14, 150) de telle sorte que celui-ci règle l'inclinaison des zones axiales (16a, 16b) l'une par rapport à l'autre.

6. Machine de récolte selon l'une quelconque des revendications 2 à 5, **caractérisée en ce que** le dispositif de réglage (32) est mécanique.

7. Machine de récolte selon l'une quelconque des revendications précédentes, **caractérisée en ce que** l'unité de transport à rotor (14, 150) est raccordée à un cadre par l'intermédiaire d'au moins deux éléments palier (24), dans laquelle au moins un élément palier (24) est associé à chaque zone partielle (16a, 16b, 152, 154).

8. Machine de récolte selon l'une quelconque des revendications précédentes, **caractérisée en ce qu'**une deuxième unité de travail est réalisée sous la forme d'un transporteur à bande (80, 160), dans laquelle des rouleaux (82a, 82b) sont agencés sur un cadre portant l'unité de réception (60, 140), rouleaux par l'intermédiaire desquels une bande transporteuse (162) est guidée et la bande transporteuse (162) est portée entre les rouleaux (82a, 82b) par l'intermédiaire d'une structure de support (83), de telle sorte que la structure de support (83) présente deux zones partielles dans la direction d'étendue principale qui peuvent être inclinées l'une par rapport à l'autre.

9. Machine de récolte selon la revendication 8, **caractérisée en ce qu'**un dispositif de déviation (65) est prévu, qui est relié à la structure de support (86a) de telle sorte qu'une déviation de la structure de support (86a) s'effectue en fonction du contour du sol.

10. Machine de récolte selon l'une quelconque des revendications 8 ou 9, **caractérisée en ce que** le dispositif de déviation (65) comprend un moyen d'appui (62) mobile par rapport au cadre dans la direction verticale, lequel moyen est agencé entre les rouleaux (82a, 82b), ce qui a pour effet que la déviation peut être adaptée en fonction de la position du moyen d'appui (62).

11. Machine de récolte selon l'une quelconque des revendications 8 à 10, **caractérisée en ce que** la structure de support (83) comprend au moins une traverse de soutien (86a, 86b, 88a, 88b) souple en flexion, qui est prévue entre les rouleaux (82a, 82b), dans laquelle l'inclinaison des zones partielles est atteinte par la flexion de la traverse d'appui (86a, 86b, 88a, 88b).

12. Machine de récolte selon l'une quelconque des revendications 8 à 11, **caractérisée en ce que** la structure de support comprend deux traverses de soutien (86a, 86b, 88a, 88b) souples en flexion, qui sont guidées parallèlement l'une à l'autre dans la direction de la bande.

13. Machine de récolte selon l'une quelconque des revendications 8 à 12, **caractérisée en ce que** la structure de support comprend dans la direction de la bande deux traverses de soutien (86a, 86b, 88a, 88b) souples en flexion, qui sont reliées par l'intermédiaire d'un élément de compensation de longueur en particulier élastique, dans laquelle l'élément de compensation de longueur est réalisé sous la forme d'une bride de fixation (87).

14. Machine de récolte selon l'une quelconque des revendications 8 à 13, **caractérisée en ce que** les deux traverses de soutien (86, 88) parallèles sont reliées par l'intermédiaire d'un stabilisateur (90).

15. Machine de récolte selon l'une quelconque des revendications 8 à 14, **caractérisée en ce que** le dispositif de déviation comprend un élément boucle (64), lequel présente des branches qui entourent la structure de support (86a) dans la direction de déviation, dans laquelle les branches sont espacées de la structure de support (86a) dans la direction de déviation.
